# EUROPÄISCHE PATENTSCHRIFT

(11) **EP 3 707 547 B1**
(45) Veröffentlichungstag und Bekanntmachung des Hinweises auf die Patenterteilung: **31.07.2024**
(21) Anmeldenummer: 18789029.8
(22) Anmeldetag: 10.10.2018
(51) Int. Cl.: G02B 27/00, G02B 27/01, B60R 16/02

(54) **SYSTEM UND VERFAHREN ZUM BESTIMMEN EINER POSE EINER AUGMENTED-REALITY-BRILLE, SYSTEM UND VERFAHREN ZUM EINMESSEN EINER AUGMENTED-REALITY-BRILLE, VERFAHREN ZUM UNTERSTÜTZEN EINER POSENBESTIMMUNG EINER AUGMENTED-REALITY-BRILLE UND FÜR DAS VERFAHREN GEEIGNETES KRAFTFAHRZEUG**
SYSTEM AND METHOD FOR DETERMINING A POSE OF AUGMENTED REALITY GLASSES, SYSTEM AND METHOD FOR CALIBRATING AUGMENTED REALITY GLASSES, METHOD FOR ASSISTING A DETERMINATION OF THE POSE OF AUGMENTED REALITY GLASSES AND MOTOR VEHICLE SUITABLE FOR THE METHOD
SYSTÈME ET PROCÉDÉ DE DÉTERMINATION D'UNE POSE DE LUNETTES DE RÉALITÉ AUGMENTÉE, SYSTÈME ET PROCÉDÉ D'ÉTALONNAGE DE LUNETTES DE RÉALITÉ AUGMENTÉE, PROCÉDÉ POUR ASSISTER À LA DÉTERMINATION D'UNE POSE DE LUNETTES DE RÉALITÉ AUGMENTÉE ET VÉHICULE ADAPTÉ À LA MISE EN OEUVRE DU PROCÉDÉ

(30) Priorität: 07.11.2017 DE 102017219790
(43) Veröffentlichungstag der Anmeldung: 16.09.2020
(73) Patentinhaber: Volkswagen Aktiengesellschaft, 38440 Wolfsburg (DE)
(72) Erfinder: HAAR, Adrian, 30173 Hannover (DE); TÜMLER, Johannes, 39167 Wellen (DE)
(86) Internationale Anmeldenummer: PCT/EP2018/077645
(87) Internationale Veröffentlichungsnummer: WO 2019/091688

(56) Entgegenhaltungen:
- DE-A1- 102014 218 406
- DE-A1- 102014 221 190
- JP-A- 2008 160 365
- KR-A- 20060 066 807
- US-A1- 2011 199 685

## Beschreibung

Die vorliegende Erfindung betrifft ein System und ein Verfahren zum Bestimmen einer Pose einer Augmented-Reality-Brille sowie ein System und ein Verfahren zum Einmessen einer Augmented-Reality-Brille. Die Erfindung betrifft des Weiteren ein Verfahren zum Unterstützen einer Posenbestimmung einer Augmented-Reality-Brille sowie ein Kraftfahrzeug, das für die Umsetzung dieses Verfahrens geeignet ist.

Mit der stetigen Weiterentwicklung von Virtual und Augmented Reality-Technologien
und -Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt.

Eine mögliche technische Realisierung, um den Fahrerarbeitsplatz entsprechend mit perspektivisch korrekten virtuellen Erweiterungen anzureichern, bieten Augmented-Reality-Brillen. Eine Augmented-Reality-Brille wird wie eine normale Brille getragen, weist aber eine oder mehrere Projektionseinheiten oder Anzeigen auf, mit deren Hilfe dem Träger der Brille Informationen vor die Augen oder direkt auf die Netzhaut projiziert werden können. Die Brille ist dabei so gestaltet, dass der Träger auch die Umgebung wahrnehmen kann. Vorzugsweise werden dem Träger Informationen oder Hinweise kontaktanalog angezeigt. Dabei erfolgt die Anzeige der Informationen oder Hinweise an einem Ort, der sich am Ort eines Objektes in der Umgebung orientiert, z.B. an das Objekt angrenzend oder dieses überlagernd. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Durch Markieren von Objekten und Einblenden von Informationen an ihrem realen Bezugsort, d.h. durch die kontaktanaloge Darstellung, lassen sich umweltbezogene Informationen im Sichtfeld des Fahrers direkt darstellen. Da die Anzeigen als "Teil der Umwelt" dargestellt werden können, sind äußerst schnelle und intuitive Interpretationen durch den Träger möglich. Diese direkte grafische Anreicherung der Umwelt in Form von Augmented Reality kann die kognitiven Transferanforderungen daher erheblich reduzieren.

Eine Registrierung der virtuellen Informationen im realen Sichtfeld des Fahrers im Sinne von Augmented Reality stellt sehr hohe Anforderungen an die technische Umsetzung. Um virtuelle Inhalte ortsgenau und perspektivisch korrekt in der Realität darstellen zu können, ist sehr detailliertes Wissen über die Umgebung und Eigenbewegung des Fahrzeuges notwendig. Insbesondere muss auch die Pose der Augmented-Reality-Brille bekannt sein, d.h. ihre Position und Ausrichtung relativ zum Fahrzeug.

Zur Posenbestimmung von Augmented-Reality-Brillen können inertiale Messsysteme genutzt werden, die auf Masseträgheit basieren. Die Sensoren solcher Messsysteme werden direkt an der Brille befestigt und messen die Bewegungen der Brille durch das Erfassen von Beschleunigungen.

In diesem Zusammenhang beschreibt US 2017/0178412 A1 eine Datenbrille, mittels derer in einer Mixed-Reality-Umgebung eine Vielzahl von Stufen an visueller Informationsdichte für eine Vielzahl von georeferenzierten Datenelementen angezeigt werden können. Ein abgestuftes Programm zur Bereitstellung von Informationen erhält Informationen für ein erstes georeferenziertes Datenelement und stellt der Datenbrille eine erste Stufe visueller Informationsdichte für das Objekt zur Verfügung. Wenn eine räumliche Informationsdichte von Informationen für georeferenzierte Datenelemente unterhalb einer Schwelle liegt, liefert das Programm eine zweite Stufe visueller Informationsdichte für ein zweites georeferenziertes Datenelement, die größer ist als die erste Stufe. Zur Bestimmung einer Pose der Datenbrille werden dabei Bewegungssensoren genutzt.

Ein Nachteil der inertialen Systeme liegt darin, dass nur relative Messungen stattfinden und durch zweifache Integration des Messergebnisses eine Drift entsteht, die in kurzer Zeit das Trackingergebnis unbrauchbar macht. Daher müssen inertiale Systeme zwingend mit einem nicht-driftenden Messsystem gekoppelt werden.

In der Regel werden zur Posenbestimmung von Augmented-Reality-Brillen deshalb optische Messsysteme eingesetzt. Hierbei findet üblicherweise eine Beobachtung der zu verfolgenden Objekte von außen statt, weshalb man bei solchen Systemen von Outside-In Tracking spricht. Dafür steht beispielsweise im Fahrzeug ein zusätzliches Sensorsystem zur Verfügung, z.B. eine Kamera, welches Bewegungen der Augmented-Reality-Brille erfasst.

Beispielsweise beschreibt die Arbeit von Guy Berg: "Das Vehicle in the Loop - Ein Werkzeug für die Entwicklung und Evaluation von sicherheitskritischen Fahrerassistenzsystemen" [1] eine Test- und Simulationsumgebung für Fahrerassistenzsysteme. Dabei wird eine Test- und Simulationsumgebung samt integrierter Verkehrssimulation mit einem realen Testfahrzeug verknüpft. Der Fahrer wird dabei mit Hilfe eines Head Mounted Displays (HMD) in eine erweiterte oder virtuelle Realität versetzt, so dass er eine direkte visuelle Rückmeldung aus der Simulationsumgebung sowie haptische, vestibuläre, somatosensorische und akustische Rückmeldungen von der realen Fahrzeuginteraktion erhält. Im Betrieb werden Position und Lage des Fahrzeugs auf einer Teststrecke geortet. Durch Kenntnis dieser in der realen Welt sind auch die entsprechende Position und Lage des Fahrzeugs in der virtuellen Welt bekannt. Zusätzlich wird mit Hilfe eines im Fahrzeug verbauten Sensors die Blickrichtung des Fahrers bestimmt. Mit Hilfe von Position und Lage des Fahrzeugs sowie der Blickrichtung des Fahrers wird in der Simulationssoftware das zur Realität korrespondierende Bild der virtuellen Welt erzeugt und dem Fahrer über das HMD visualisiert. Dabei wird ein optisches Tracking des Kopfes genutzt, das optische Marker nutzt.

Ein Nachteil der Outside-In-Systeme ist, dass zusätzlich zur Brille ein zweites Messsystem erforderlich ist.

Als Alternative zum Outside-In Tracking kann das sogenannte Inside-Out Tracking genutzt werden, bei dem das Messsystem in das zu verfolgende Objekt integriert ist, d.h. es wird die Umgebung aus Sicht des Objekts erfasst. Dabei ist das messende System selbst bewegt.

Beispielsweise beschreibt die DE 10 2014 217 963 A1 eine Datenbrille zur Verwendung in einem Kraftfahrzeug. Die Datenbrille umfasst eine Anzeige, eine Infrarot-Kamera, in deren Aufnahmen im Wesentlichen Infrarotlicht abgebildet wird, sowie elektronische Verarbeitungsmittel. Mithilfe der Kamera wird die Umgebung der Datenbrille aufgenommen. In den Aufnahmen wird dann ein vordefiniertes Muster erkannt. Dazu wird vorab ein Infrarot-Muster mithilfe einer Beschichtung im Fahrzeuginnenraum angebracht. In Abhängigkeit vom erkannten Muster wird schließlich die Pose der Datenbrille bestimmt.

Ein Nachteil des beschriebenen Systems besteht darin, dass im Fahrzeug spezielle Marker angebracht werden müssen, was im Hinblick auf die Gestaltung und Anmutung des Innenraums unerwünscht sein kann.

Vor diesem Hintergrund beschreibt die DE 10 2014 218 406 A1 eine transparente Scheibe, insbesondere Glasscheibe, für ein Kraftfahrzeug. Die Scheibe weist ein Infrarotlichtreflektierendes Muster auf, das dazu ausgebildet ist, von einem mobilen Endgerät, insbesondere einer Datenbrille, mit Infrarotlicht-Kamera erkannt zu werden. Das Muster dient dabei zur Bestimmung der Pose des mobilen Endgerätes relativ zum Muster.

Die DE 10 2014 221 190 A1 beschreibt ein Verfahren zum Bestimmen der Position und/oder Ausrichtung einer Datenbrille in einem Fahrzeug. Bei dem Verfahren werden Marker in einer Frontscheibe des Fahrzeugs von einer Infrarotlichtquelle beleuchtet. Die beleuchteten Marker sind für das menschliche Auge nicht sichtbar. Eine Kamera der Datenbrille macht Aufnahmen der Frontscheibe. In diesen Aufnahmen werden die Marker detektiert. Abhängig von der Position der erkannten Marker in den Aufnahmen der Kamera werden die Position und/oder Ausrichtung der Datenbrille bestimmt.

Die US 2011/0199685 A1 beschreibt eine optische Vorrichtung, die so konfiguriert ist, dass sie einfallendes Licht teilweise reflektiert, z.B. eine optische Vorrichtung, die so konfiguriert ist, dass der sichtbare Teil des einfallenden Lichts durch sie hindurchgeht und der infrarote Teil des einfallenden Lichts in eine bestimmte Richtung reflektiert wird. Zu diesem Zweck kann eine Prismenstruktur vorgesehen sein.

Moderne Augmented-Reality-Brillen nutzen oftmals visuelle Systeme und maschinelles Lernen, um eine möglichst genaue Lage der Brille im Raum zu bestimmen und daraus lagerichtige Einblendungen für den Anwender zu generieren. Hierbei wird die Pose und Bewegung der Brille abhängig von markanten Ecken und Kanten im umliegenden Raum durch Verfahren der optischen Messtechnik bestimmt. Allerdings werden Augmented-Reality-Brillen auf dem Kopf eines Anwenders getragen. Die für das Tracking verwendete Kamera ist in das Gehäuse der Augmented-Reality-Brille integriert. Trägt ein Anwender die Brille in einem Fahrzeug, so erfasst die Kamera sowohl die Außenwelt als auch den Innenraum des Fahrzeugs. Durch eine Fortbewegung des Fahrzeugs sind im Kamerabild die zum Innenraum gehörigen Bildbereiche relativ statisch, während die zur Außenwelt gehörigen Bildbereiche sehr dynamisch sind. Dies kann, je nach verwendetem Trackingverfahren der Brille, ein Tracking unmöglich machen, da der zugrundeliegende Algorithmus nicht erkennen kann, welche Bildbereiche für ein stabiles Tracking genutzt werden können oder sollen. Erst wenn das Fahrzeug wieder zum Stand kommt und im Kamerabild ein konsistentes Verhalten von Innen- und Außenraum besteht, kann das Tracking zuverlässig funktionieren.

Es ist eine Aufgabe der Erfindung, alternative Lösungen zum Bestimmen einer Pose einer Augmented-Reality-Brille und zum Einmessen einer Augmented-Reality-Brille aufzuzeigen. Diese Aufgabe wird durch ein System mit den Merkmalen der Ansprüche 1 oder 2, durch ein Verfahren mit den Merkmalen der Ansprüche 8, 9 oder 11 sowie durch ein Kraftfahrzeug mit den Merkmalen des Anspruchs 12 gelöst. Bevorzugte Ausgestaltungen der Erfindung sind Gegenstand der abhängigen Ansprüche.

Gemäß einem ersten Aspekt der Erfindung weist ein System zum Bestimmen einer Pose einer Augmented-Reality-Brille in einem Kraftfahrzeug auf:
- zumindest eine im Kraftfahrzeug angeordnete Lichtquelle zum Beleuchten zumindest einer Frontscheibe des Kraftfahrzeugs mit Licht einer für den Menschen nicht wahrnehmbaren Wellenlänge;
- eine in der Augmented-Reality-Brille angeordnete optische Erfassungsvorrichtung, die eingerichtet ist, Licht der für den Menschen nicht wahrnehmbaren Wellenlänge zu erfassen; und
- eine Posenbestimmungsvorrichtung zum Bestimmen einer Pose der Augmented-Reality-Brille anhand der von der optischen Erfassungsvorrichtung erfassten Informationen, wobei der Bereich der Frontscheibe durch das von der Frontscheibe reflektierte Licht für das Bestimmen der Pose der Augmented-Reality-Brille maskiert wird, indem das von der Lichtquelle erzeugte Licht nahezu ausschließlich auf die Frontscheibe trifft und diese dabei möglichst vollständig ausleuchtet, wobei das von der Lichtquelle ausgesandte, von der Frontscheibe reflektierte und auf die optische Erfassungsvorrichtung auftreffende Licht jenes Licht überstrahlt, welches von außen durch die Frontscheibe auf die optische Erfassungsvorrichtung trifft, so dass sich die Kontur der Frontscheibe in der optischen Erfassungsvorrichtung abbildet.

Gemäß einem weiteren Aspekt der Erfindung weist ein System zum Einmessen einer Augmented-Reality-Brille in einem Kraftfahrzeug auf:
- zumindest eine im Kraftfahrzeug angeordnete Lichtquelle zum Beleuchten zumindest einer Frontscheibe des Kraftfahrzeugs mit Licht einer für den Menschen nicht wahrnehmbaren Wellenlänge;
- eine in der Augmented-Reality-Brille angeordnete optische Erfassungsvorrichtung, die eingerichtet ist, Licht der für den Menschen nicht wahrnehmbaren Wellenlänge zu erfassen; und
- eine Einmessvorrichtung zum Ermitteln einer Transformationsvorschrift für die Augmented-Reality-Brille durch einen Abgleich von Kanten der Frontscheibe, die auf Grundlage des von der Frontscheibe reflektierten Lichts detektiert wurden, mit einer bekannten Geometrie der Frontscheibe, wobei das von der Lichtquelle erzeugte Licht nahezu ausschließlich auf die Frontscheibe trifft und diese dabei möglichst vollständig ausleuchtet, wobei das von der Lichtquelle ausgesandte, von der Frontscheibe reflektierte und auf die optische Erfassungsvorrichtung auftreffende Licht jenes Licht überstrahlt, welches von außen durch die Frontscheibe auf die optische Erfassungsvorrichtung trifft, so dass sich die Kontur der Frontscheibe in der optischen Erfassungsvorrichtung abbildet.

Gemäß einem weiteren Aspekt der Erfindung umfasst ein Verfahren zum Bestimmen einer Pose einer Augmented-Reality-Brille in einem Kraftfahrzeug die Schritte:
- Beleuchten zumindest einer Frontscheibe des Kraftfahrzeugs mit Licht einer für den Menschen nicht wahrnehmbaren Wellenlänge;
- Erfassen des von der Frontscheibe des Kraftfahrzeugs reflektierten Lichts der für den Menschen nicht wahrnehmbaren Wellenlänge durch eine in der Augmented-Reality-Brille angeordnete optische Erfassungsvorrichtung; und
- Bestimmen einer Pose der Augmented-Reality-Brille anhand der von der optischen Erfassungsvorrichtung erfassten Informationen, wobei der Bereich der Frontscheibe durch das von der Frontscheibe reflektierte Licht für das Bestimmen der Pose der Augmented-Reality-Brille maskiert wird, indem das von der Lichtquelle erzeugte Licht nahezu ausschließlich auf die Frontscheibe trifft und diese dabei möglichst vollständig ausleuchtet, wobei das von der Lichtquelle ausgesandte, von der Frontscheibe reflektierte und auf die optische Erfassungsvorrichtung auftreffende Licht jenes Licht überstrahlt, welches von außen durch die Frontscheibe auf die optische Erfassungsvorrichtung trifft, so dass sich die Kontur der Frontscheibe in der optischen Erfassungsvorrichtung abbildet.

Gemäß einem weiteren Aspekt der Erfindung umfasst ein Verfahren zum Einmessen einer Augmented-Reality-Brille in einem Kraftfahrzeug die Schritte:
- Beleuchten zumindest einer Frontscheibe des Kraftfahrzeugs mit Licht einer für den Menschen nicht wahrnehmbaren Wellenlänge;
- Erfassen des von der Frontscheibe des Kraftfahrzeugs reflektierten Lichts der für den Menschen nicht wahrnehmbaren Wellenlänge durch eine in der Augmented-Reality-Brille angeordnete optische Erfassungsvorrichtung;
- Detektieren von Kanten der Frontscheibe auf Grundlage des von der Frontscheibe reflektierten Lichts; und
- Ermitteln einer Transformationsvorschrift für die Augmented-Reality-Brille durch einen Abgleich der Kanten der Frontscheibe mit einer bekannten Geometrie der Frontscheibe, wobei das auf die Frontscheibe treffende, von der Frontscheibe reflektierte und auf die optische Erfassungsvorrichtung auftreffende Licht jenes Licht überstrahlt, welches von außen durch die Frontscheibe auf die optische Erfassungsvorrichtung trifft, so dass sich die Kontur der Frontscheibe in der optischen Erfassungsvorrichtung abbildet.

Gemäß einem weiteren Aspekt der Erfindung umfasst ein Verfahren zum Unterstützen einer Posenbestimmung einer Augmented-Reality-Brille in einem Kraftfahrzeug die Schritte:
- Erzeugen von Licht einer für den Menschen nicht wahrnehmbaren Wellenlänge; und
- Beleuchten zumindest einer Frontscheibe des Kraftfahrzeugs mit dem Licht der für den Menschen nicht wahrnehmbaren Wellenlänge, wobei das erzeugte Licht nahezu ausschließlich auf die Frontscheibe trifft und diese dabei möglichst vollständig ausleuchtet, und wobei das auf die Frontscheibe treffende, von der Frontscheibe reflektierte und auf eine in der Augmented-Reality-Brille angeordnete optische Erfassungsvorrichtung auftreffende Licht jenes Licht überstrahlt, welches von außen durch die Frontscheibe auf die optische Erfassungsvorrichtung trifft, so dass sich die Kontur der Frontscheibe in der optischen Erfassungsvorrichtung abbildet.

Gemäß einem weiteren Aspekt der Erfindung weist ein Kraftfahrzeug eine Frontscheibe und zumindest eine in einem Innenraum angeordnete Lichtquelle zum Generieren von Licht einer für den Menschen nicht wahrnehmbaren Wellenlänge auf, wobei die zumindest eine Lichtquelle derart ausgebildet ist, dass das von ihr generierte Licht nahezu ausschließlich auf die Frontscheibe trifft und diese dabei möglichst vollständig ausleuchtet, wobei das auf die Frontscheibe treffende, von der Frontscheibe reflektierte und auf eine in einer Augmented-Reality-Brille angeordnete optische Erfassungsvorrichtung auftreffende Licht jenes Licht überstrahlt, welches von außen durch die Frontscheibe auf die optische Erfassungsvorrichtung trifft, so dass sich die Kontur der Frontscheibe in der optischen Erfassungsvorrichtung abbildet, und wobei die Frontscheibe eine reflektierende Schicht aufweist, die eingerichtet ist, das Licht der für den Menschen nicht wahrnehmbaren Wellenlänge in Richtung einer optischen Erfassungsvorrichtung zu reflektieren.

Der vorliegenden Erfindung liegt der Ansatz zugrunde, dass bestimmte Bereiche, die explizit aus Sicht der Brille vom Tracking ausgeschlossen werden sollen, maskiert werden. Dies betrifft insbesondere die Sicht durch die Frontscheibe. Die Maskierung erfolgt durch den Einsatz von Licht einer definierten Wellenlänge und ausreichend hoher Leuchtstärke, das von einer entsprechenden Lichtquelle im Innenraum des Fahrzeugs erzeugt wird. Die Wellenlänge dieses Lichts liegt außerhalb des für den Menschen sichtbaren Wellenlängenbereichs, die genutzte Wellenlänge bzw. der genutzte Wellenlängenbereich kann jedoch von einer optischen Erfassungsvorrichtung, beispielsweise einer Kamera, erfasst werden. Die Lichtquelle sendet ihr Licht auf die Frontscheibe, von der das auftreffende Licht in Richtung der Kamera reflektiert wird. Es trifft auf die Kamera der Augmented-Reality-Brille und überstrahlt dort das Licht, welches durch die Frontscheibe von außen einfällt. Im Kamerabild erscheint dadurch die entsprechend bestrahlte Stelle als heller Fleck. Da erfindungsgemäß die gesamte Frontscheibe beleuchtet wird, bildet sich die Kontur der Scheibe im Kamerabild ab. Als Resultat ist im Kamerabild keine störende Außenwelt sichtbar, so dass eine zuverlässige Posenbestimmung ermöglicht wird. Durch die Verwendung einer reflektierenden Schicht erhöht sich der Anteil des in Richtung Kamera reflektierten Lichts, so dass die Leuchtstärke der Lichtquelle reduziert werden kann. Der Begriff der Augmented-Reality-Brille ist hier breit zu verstehen und umfasst, ohne Beschränkung der Allgemeinheit, auch Mixed-Reality-Brillen, Datenbrillen und Head-Mounted Displays.

Eine wichtige Herausforderung für das lagerichtige Einblenden von Objekten in Augmented-Reality-Brillen ist die korrekte Lagebestimmung der Brille relativ zum betrachteten Objekt. Der Schritt, das Brillensystem zu bekannten Objekten räumlich zu registrieren, wird als Einmessung bezeichnet. Bekannte Verfahren der Einmessung nutzen ein Mehrpunktverfahren, bei dem bekannte 3D-Koordinaten des betrachteten Objektes zu betrachteten Punkten im realen Raum in Bezug gesetzt werden. Beispielsweise markiert man einen Punkt der Ecke eines betrachteten Objektes im realen Raum und setzt diesen in Bezug zu demselben Punkt im virtuellen Raum. Dies wird mit mehreren Punkten wiederholt, woraus eine Transformationsvorschrift des Koordinatensystems der Brille ins Objektkoordinatensystem bestimmt werden kann. Durch die Beleuchtung der Frontscheibe wie oben beschrieben bildet sich die Geometrie der Frontscheibe im Kamerabild ab. Ist die vollständige Frontscheibe im Sichtfeld, so kann durch die bekannte Geometrie der Frontscheibe (virtuelle Daten) ein Kantenabgleich mit dem Kamerabild (reale Daten) erfolgen. Durch best-fit-Algorithmen wird dabei die bekannte Geometrie der Scheibe auf die detektierten Kanten abgebildet und somit die notwendige Einmesstransformation ermittelt. Dabei wird lediglich eine einzige Kamera benötigt, da der Kopf des Anwenders sich fortlaufend zumindest geringfügig relativ zur Scheibe bewegt und somit unterschiedliche Perspektiven auf das Objekt, d.h. die Scheibe, erfasst werden. Dem Anwender kann zum Zwecke des Einmessens eine Initialisierungsbewegung auferlegt werden. Beispielsweise kann der Anwender aufgefordert werden, seinen Kopf einmal von links nach rechts zu schwenken. Gemäß einem Aspekt der Erfindung können die Posenbestimmungsvorrichtung oder die Einmessvorrichtung in der Augmented-Reality-Brille oder im Kraftfahrzeug angeordnet sein. Bei der Anordnung im Kraftfahrzeug reduziert sich die Rechenleistung, die von der Augmented-Reality-Brille erbracht werden muss, was sich positiv auf die Kosten und die Betriebsdauer bei einem Akkubetrieb auswirkt. Die Anordnung in der Augmented-Reality-Brille hat hingegen den Vorteil, dass die Brille nicht auf eine bestimmte Technik angewiesen ist, die im Fahrzeug verbaut sein muss, sondern die Posenbestimmung bzw. das Einmessen autonom vornehmen kann.

Gemäß einem Aspekt der Erfindung werden weitere Scheiben des Kraftfahrzeugs oder Objekte im Innenraum des Kraftfahrzeugs von der zumindest einen Lichtquelle oder von weiteren Lichtquellen mit Licht der für den Menschen nicht wahrnehmbaren Wellenlänge beleuchtet. Während des Fahrens umfasst der Sichtbereich der optischen Erfassungsvorrichtung der Augmented-Reality-Brille hauptsächlich den Bereich der Frontscheibe, da der Fahrer auf die Fahrbahn achten muss, dennoch können auch durch die Seitenscheiben oder andere Scheiben störende Einflüsse des Außenraums erfasst werden. Ebenso kann es zu unerwünschten Reflexionen des Außenraums am Innenspiegel oder an anderen spiegelnden Flächen im Innenraum kommen. Die daraus resultierenden Störungen können vermieden werden, indem die Anwendung der erfindungsgemäßen Lösung auch auf diese Scheiben und Objekte ausgeweitet wird.

Gemäß einem Aspekt der Erfindung weisen auch die weiteren Scheiben oder die Objekte im Innenraum des Kraftfahrzeugs eine reflektierende Schicht auf, die Licht der für den Menschen nicht wahrnehmbaren Wellenlänge in Richtung der optischen Erfassungsvorrichtung reflektiert. Dabei kann die reflektierende Schicht beispielsweise eine Prismenstruktur oder holographisch-optische Elemente aufweisen.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch eine Augmented-Reality-Brille;
- Fig. 2: zeigt schematisch ein System zum Bestimmen einer Pose einer Augmented-Reality-Brille sowie zum Einmessen einer Augmented-Reality-Brille in einem Kraftfahrzeug;
- Fig. 3: zeigt schematisch ein Verfahren zum Unterstützen einer Posenbestimmung einer Augmented-Reality-Brille, zum Bestimmen einer Pose einer Augmented-Reality-Brille und zum Einmessen einer Augmented-Reality-Brille;
- Fig. 4: zeigt eine erste Ausführungsform einer kombinierten Vorrichtung zum Einmessen und zum Bestimmen einer Pose einer Augmented-Reality-Brille;
- Fig. 5: zeigt eine zweite Ausführungsform einer kombinierten Vorrichtung zum Einmessen und zum Bestimmen einer Pose einer Augmented-Reality-Brille;
- Fig. 6: stellt schematisch einen Innenraum eines Kraftfahrzeugs dar, in dem eine erfindungsgemäße Lösung realisiert ist;
- Fig. 7: zeigt den Innenraum aus Fig. 6 bei eingeschalteter Lichtquelle,
- Fig. 8: stellt schematisch ein Sichtfeld der optischen Erfassungsvorrichtung der Augmented-Reality-Brille im Innenraum aus Fig. 6 dar; und
- Fig. 9: zeigt das Sichtfeld aus Fig. 8 bei eingeschalteter Lichtquelle.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

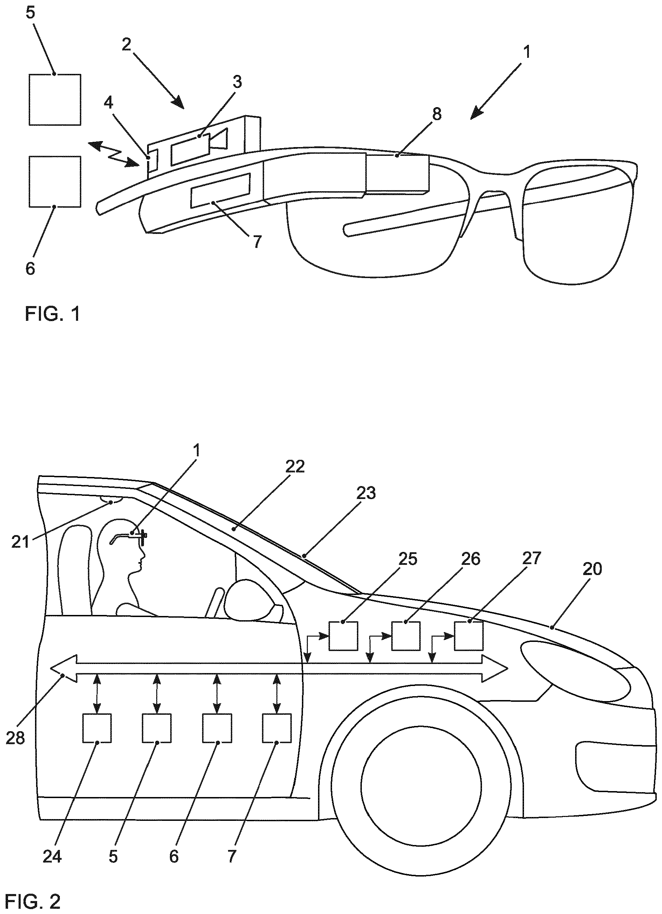

Fig. 1 zeigt schematisch eine Augmented-Reality-Brille 1. Die Augmented-Reality-Brille 1 hat eine optische Erfassungsvorrichtung 2, die beispielsweise eine Kamera 3 aufweist, zum Erfassen von Umgebungsdaten einer Umgebung der Augmented-Reality-Brille 1. Dabei ist die optische Erfassungsvorrichtung 2 eingerichtet, neben Licht, das für den Menschen sichtbar ist, auch Licht einer für den Menschen nicht sichtbaren Wellenlänge zu erfassen. Mittels einer Schnittstelle 4 besteht eine Verbindung zu einer externen Posenbestimmungsvorrichtung 5 zum Bestimmen einer Pose der Augmented-Reality-Brille 1 anhand der Umgebungsdaten. Die Posenbestimmungsvorrichtung 5 kann dazu beispielsweise Kanten oder markante Punkte in den Bilddaten detektieren und auswerten. Die Posenbestimmungsvorrichtung 5 kann natürlich auch Bestandteil der Augmented-Reality-Brille 1 sein. Weiterhin besteht über die Schnittstelle 4 eine Verbindung zu einer externen Einmessvorrichtung 6 zum Ermitteln einer Transformationsvorschrift für die Augmented-Reality-Brille. Die Einmessvorrichtung 6 kann dazu beispielsweise einen Abgleich von Kanten, die durch die optische Erfassungsvorrichtung detektiert wurden, mit einer bekannten Geometrie der Kanten durchführen. Die Einmessvorrichtung 6 kann natürlich ebenfalls Bestandteil der Augmented-Reality-Brille 1 sein. Mittels einer Grafikeinheit 7 kann die Anzeige der Augmented-Reality-Brille 1 entsprechend der ermittelten Pose unter Verwendung der Transformationsvorschrift angepasst werden. Dazu können die Posenbestimmungsvorrichtung 5 und die Grafikeinheit 7 miteinander Daten austauschen. Die Grafikeinheit 7 kann, wie im Beispiel dargestellt, Bestandteil der Augmented-Reality-Brille 1 sein oder über eine Schnittstelle mit der Augmented-Reality-Brille 1 verbunden sein. Die von der Grafikeinheit 7 generierte Anzeige wird durch eine Projektionseinheit 8 eingeblendet. Im Beispiel in Fig. 1 wird ein monokulares Display genutzt, d.h. nur vor einem Auge des Nutzers ist ein Display angeordnet. Die vorliegend beschriebene Lösung kann selbstverständlich auch mit einer Augmented-Reality-Brille 1 mit einem binokularen Display, bei dem pro Auge ein Display genutzt wird, oder mit einem biokularen Display, bei dem für beide Augen ein gemeinsames Display genutzt wird, realisiert werden.

Fig. 2 zeigt schematisch ein System zum Bestimmen einer Pose einer Augmented-Reality-Brille 1 sowie zum Einmessen einer Augmented-Reality-Brille 1. Das System umfasst neben der Augmented-Reality-Brille 1 ein Kraftfahrzeug 20. Im Innenraum des Kraftfahrzeugs 20 ist zumindest eine Lichtquelle 21 verbaut, die zumindest die Frontscheibe 22 des Kraftfahrzeugs 20 mit Licht einer für den Menschen nicht wahrnehmbaren Wellenlänge beleuchtet. Die Frontscheibe 22 sowie gegebenenfalls weitere Scheiben reflektieren das von der Lichtquelle 21 auftreffende Licht in Richtung der optischen Erfassungsvorrichtung der Augmented-Reality-Brille 1. Die Frontscheibe 22 sowie die weiteren Scheiben können dazu mit einer reflektierenden Schicht 23 versehen sein. Die optische Erfassungsvorrichtung erfasst das reflektierte Licht und übermittelt ein Kamerabild über einer drahtlose oder drahtgebundene Verbindung an eine Posenbestimmungsvorrichtung 5 oder eine Einmessvorrichtung 6. In diesem Beispiel sind die Posenbestimmungsvorrichtung 5 und die Einmessvorrichtung 6 im Kraftfahrzeug 20 realisiert und nicht Bestandteil der Augmented-Reality-Brille 1. Anhand der von der optischen Erfassungsvorrichtung erfassten Informationen bestimmt die Posenbestimmungsvorrichtung 5 eine Pose der Augmented-Reality-Brille 1. Durch einen Abgleich von Kanten der Frontscheibe 22, die durch die optische Erfassungsvorrichtung detektiert wurden, mit einer bekannten Geometrie der Frontscheibe 22 kann die Einmessvorrichtung 6 zudem eine Transformationsvorschrift für die Augmented-Reality-Brille 1 ermitteln. Weiterhin weist das Kraftfahrzeug 20 ein Navigationssystem 24, eine Datenübertragungseinheit 25 sowie eine Reihe von Assistenzsystemen 26 auf, von denen eines exemplarisch dargestellt ist. Mittels der Datenübertragungseinheit 25 kann eine Verbindung zu Dienstanbietern aufgebaut werden. Zur Speicherung von Daten ist ein Speicher 27 vorhanden. Der Datenaustausch zwischen den verschiedenen Komponenten des Kraftfahrzeugs 20 erfolgt über ein Netzwerk 28. Aus den Daten der verschiedenen Fahrzeugsysteme wird von einer Grafikeinheit 7 eine Anzeige für die Augmented-Reality-Brille 1 berechnet. In Fig. 2 ist die Grafikeinheit im Kraftfahrzeug 20 realisiert, sie kann aber auch Bestandteil der Augmented-Reality-Brille 1 sein.

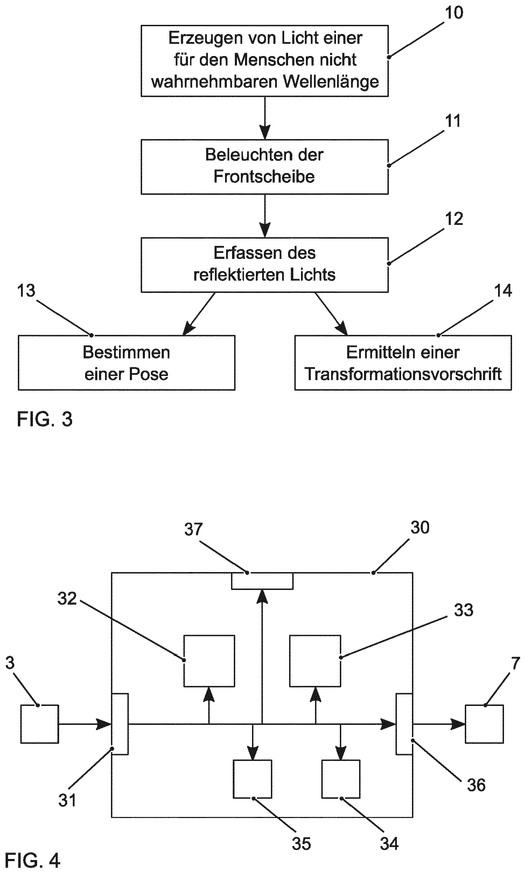

Fig. 3 zeigt schematisch ein Verfahren zum Unterstützen einer Posenbestimmung einer Augmented-Reality-Brille, zum Bestimmen einer Pose einer Augmented-Reality-Brille und zum Einmessen einer Augmented-Reality-Brille in einem Kraftfahrzeug. In einem ersten Schritt wird zum Unterstützen der Posenbestimmung von einer Lichtquelle Licht einer für den Menschen nicht wahrnehmbaren Wellenlänge erzeugt 10. Mit dem so erzeugten Licht wird dann zumindest eine Frontscheibe des Kraftfahrzeugs beleuchtet 11. Das von der Frontscheibe reflektierte Licht wird von einer optischen Erfassungsvorrichtung erfasst 12. Anhand der von der optischen Erfassungsvorrichtung erfassten Informationen kann schließlich eine Pose der Augmented-Reality-Brille bestimmt werden 13. Ebenso ist es möglich, anhand der erfassten Informationen eine Transformationsvorschrift für die Augmented-Reality-Brille zu ermitteln 14.

Fig. 4 zeigt eine vereinfachte schematische Darstellung einer ersten Ausführungsform einer kombinierten Vorrichtung 30 zum Einmessen und zum Bestimmen einer Pose einer Augmented-Reality-Brille. Die Vorrichtung 30 hat einen Eingang 31, über den Bilddaten der Kamera 3 der Augmented-Reality-Brille empfangen werden können. Die Vorrichtung 30 hat zudem eine Bildverarbeitungseinheit 32 zum Detektieren von Kanten oder markanten Punkten in den Bilddaten. Eine Analyseeinheit 33 ermittelt aus den Kanten oder markanten Punkten die Pose der Augmented-Reality-Brille. Zudem ermittelt die Analyseeinheit 33 mittels eines Abgleichs der Kanten oder markanten Punkte mit einer bekannten Geometrie der Kanten oder markanten Punkte eine Transformationsvorschrift für die Augmented-Reality-Brille. Über einen Ausgang 36 der Vorrichtung 30 werden Informationen zur ermittelten Pose sowie zur Transformationsvorschrift an eine Grafikeinheit 7 ausgegeben. Die Grafikeinheit 7 kann dann die Anzeige der Augmented-Reality-Brille entsprechend der ermittelten Pose unter Verwendung der Transformationsvorschrift anpassen. Die Anzeige der Augmented-Reality-Brille wird dabei derart angepasst, dass sichtbare Objekte optisch korrekt mit dargestellten Objekten überlagert werden. Die Grafikeinheit 7 kann Bestandteil der Augmented-Reality-Brille sein oder über eine Schnittstelle mit der Augmented-Reality-Brille verbunden sein.

Die Bildverarbeitungseinheit 32 und die Analyseeinheit 33 können von einer Kontrolleinheit 34 gesteuert werden. Über eine Benutzerschnittstelle 37 können gegebenenfalls Einstellungen der Bildverarbeitungseinheit 32, der Analyseeinheit 33 oder der Kontrolleinheit 34 geändert werden. Die in der Vorrichtung 30 anfallenden Daten können bei Bedarf in einem Speicher 35 der Vorrichtung 30 abgelegt werden, beispielsweise für eine spätere Auswertung oder für eine Nutzung durch die Komponenten der Vorrichtung 30. Die Bildverarbeitungseinheit 32, die Analyseeinheit 33 sowie die Kontrolleinheit 34 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 31 und der Ausgang 36 können als getrennte Schnittstellen oder als eine kombinierte bidirektionale Schnittstelle implementiert sein. Die Vorrichtung 30 kann Bestandteil der Augmented-Reality-Brille sein oder über eine Schnittstelle mit der Augmented-Reality-Brille verbunden sein.

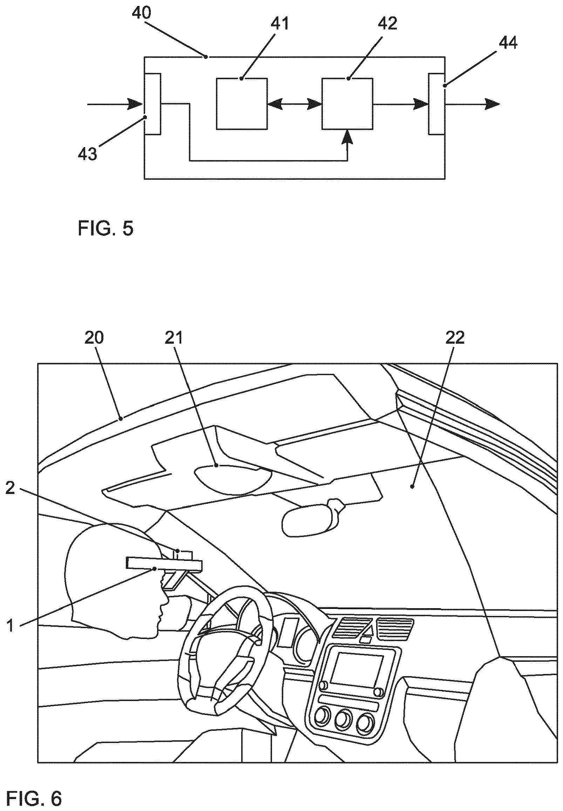

Fig. 5 zeigt eine vereinfachte schematische Darstellung einer zweiten Ausführungsform einer kombinierten Vorrichtung 40 zum Einmessen und zum Bestimmen einer Pose einer Augmented-Reality-Brille. Die Vorrichtung 40 weist einen Prozessor 42 und einen Speicher 41 auf. Beispielsweise handelt es sich bei der Vorrichtung 40 um einen Computer oder ein Steuergerät. Die Vorrichtung 40 hat einen Eingang 43 zum Empfangen von Informationen, beispielsweise von Bilddaten der Kamera der Augmented-Reality-Brille. Im Speicher 41 sind Instruktionen abgelegt, die die Vorrichtung 40 bei Ausführung durch den Prozessor 42 veranlassen, Kanten oder markante Punkte in den Bilddaten zu detektieren und mittels eines Abgleichs der Kanten oder markanten Punkte mit einer bekannten Geometrie der Kanten oder markanten Punkte eine Transformationsvorschrift für die Augmented-Reality-Brille zu ermitteln. Zudem können die Instruktionen die Vorrichtung 40 bei Ausführung durch den Prozessor 42 dazu veranlassen, aus den Kanten oder markanten Punkten die Pose der Augmented-Reality-Brille zu ermitteln. Die im Speicher 41 abgelegten Instruktionen verkörpern somit ein durch den Prozessor 42 ausführbares Programm, welches das erfindungsgemäße Verfahren realisiert. Vom Prozessor 42 generierte Daten werden über einen Ausgang 44 bereitgestellt. Darüber hinaus können sie im Speicher 41 abgelegt werden. Der Eingang 43 und der Ausgang 44 können zu einer bidirektionalen Schnittstelle zusammengefasst sein.

Der Prozessor 42 kann eine oder mehrere Prozessoreinheiten umfassen, beispielsweise Mikroprozessoren, digitale Signalprozessoren oder Kombinationen daraus.

Die Speicher 35, 41 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

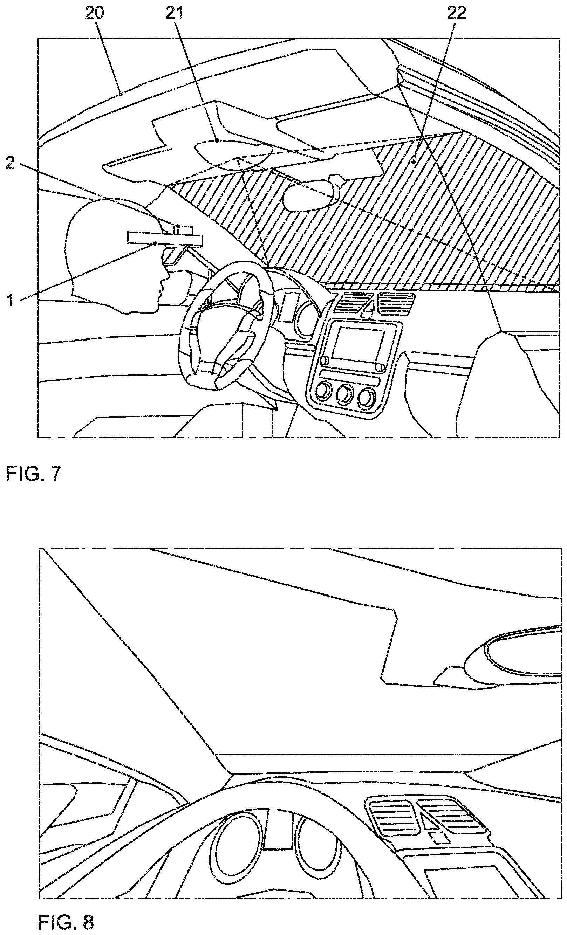

Fig. 6 und Fig. 7 stellen schematisch einen Innenraum eines Kraftfahrzeugs 20 dar, in dem eine erfindungsgemäße Lösung realisiert ist. Im Kraftfahrzeug 20 ist eine Lichtquelle 21 verbaut, die im gezeigten Beispiel am Dach angebracht ist. Selbstverständlich kann die Lichtquelle 21 auch an einer anderen Position verbaut sein, beispielsweise auf der Armaturentafel oder im Bereich einer Projektionseinheit eines Head-up-Displays. Ebenso ist es möglich, mehr als eine Lichtquelle 21 zu verwenden. Fig. 6 zeigt die Situation bei ausgeschalteter Lichtquelle 21, Fig. 7 die Situation bei eingeschalteter Lichtquelle 21. Die Lichtquelle 21 erzeugt Licht einer für den Menschen nicht sichtbaren Wellenläge, beispielsweise Licht im infraroten Spektralbereich. Die Lichtquelle 21 ist derart ausgebildet, dass das von ihr generierte Licht nahezu ausschließlich auf die Frontscheibe 22 trifft und diese dabei möglichst vollständig ausleuchtet. Die Ausleuchtung der Frontscheibe 22 ist in Fig. 7 durch die Schraffur der Frontscheibe 22 angedeutet. Das auf die Frontscheibe 22 auftreffende Licht wird reflektiert und trifft auf die optische Erfassungsvorrichtung 2 der Augmented-Reality-Brille 1. Zu diesem Zweck kann die Frontscheibe 22 mit einer reflektierenden Schicht versehen sein, die vorzugsweise nur auf die von der Lichtquelle 21 generierte Wellenlänge wirkt. Das auf die optische Erfassungsvorrichtung 2 auftreffende Licht überstrahlt das Licht, das von außen durch die Frontscheibe 22 auf die optische Erfassungsvorrichtung 2 trifft. Da die gesamte Frontscheibe 22 bestrahlt ist, bildet sich die Kontur der Frontscheibe 22 im Kamerabild ab, die entsprechend bestrahlte Stelle erscheint als heller Fleck. Dadurch ist im Kamerabild keine störende Außenwelt sichtbar. Durch eine Filterung der Kameradaten kann der helle Fleck für die weitere Verarbeitung geschwärzt werden.

Der beschriebene Ansatz kann natürlich auf beliebige andere Scheiben erweitert werden. Dazu können gegebenenfalls weitere Lichtquellen genutzt werden, die exakt auf die weiteren Scheiben ausgerichtet sind. Ebenso können andere störende Objekte auf die gleiche Art und Weise maskiert werden, insbesondere stark reflektierende Objekte wie Spiegel oder Chrom- und Lackoberflächen.

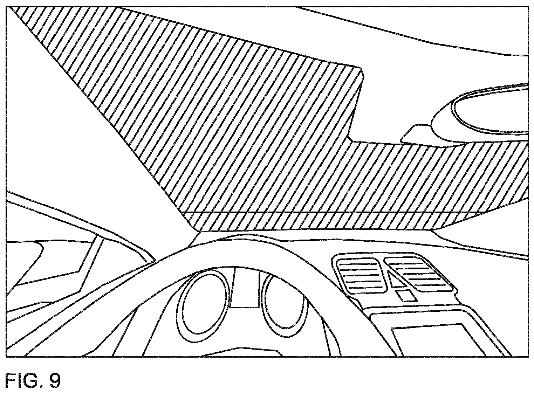

Fig. 8 und Fig. 9 stellen schematisch ein Sichtfeld der optischen Erfassungsvorrichtung der Augmented-Reality-Brille im Innenraum aus Fig. 6 dar. Fig. 8 zeigt die Situation bei ausgeschalteter Lichtquelle, Fig. 9 die Situation bei eingeschalteter Lichtquelle. Der schraffierte Bereich in Fig. 9 wird von der Lichtquelle bestrahlt und erscheint dadurch überstrahlt im Kamerabild. Die Frontscheibe erscheint dadurch quasi undurchsichtig.

### Bezugszeichenliste

- 1: Augmented-Reality-Brille
- 2: Optische Erfassungsvorrichtung
- 3: Kamera
- 4: Schnittstelle
- 5: Posenbestimmungsvorrichtung
- 6: Einmessvorrichtung
- 7: Grafikeinheit
- 8: Projektionseinheit
- 10: Erzeugen von Licht einer für den Menschen nicht wahrnehmbaren Wellenlänge
- 11: Beleuchten der Frontscheibe
- 12: Erfassen des reflektierten Lichts
- 13: Bestimmen einer Pose
- 14: Ermitteln einer Transformationsvorschrift
- 20: Kraftfahrzeug
- 21: Lichtquelle
- 22: Frontscheibe
- 23: Reflektierende Schicht
- 24: Navigationssystem
- 25: Datenübertragungseinheit
- 26: Assistenzsystem
- 27: Speicher
- 28: Netzwerk
- 30: Vorrichtung
- 31: Eingang
- 32: Bildverarbeitungseinheit
- 33: Analyseeinheit
- 34: Kontrolleinheit
- 35: Speicher
- 36: Ausgang
- 37: Benutzerschnittstelle
- 40: Vorrichtung
- 41: Speicher
- 42: Prozessor
- 43: Eingang
- 44: Ausgang

### Referenzen

[1] Guy Berg: "Das Vehicle in the Loop - Ein Werkzeug für die Entwicklung und Evaluation von sicherheitskritischen Fahrerassistenzsystemen", Dissertation an der Fakultät für Luft- und Raumfahrttechnik der Universität der Bundeswehr München (2014), http://athene-forschung.unibw.de/node?id=97267

## Patentansprüche

1. System zum Bestimmen einer Pose einer Augmented-Reality-Brille (1) in einem Kraftfahrzeug (20), mit:
- zumindest einer im Kraftfahrzeug (20) angeordneten Lichtquelle (21) zum Beleuchten (11) zumindest einer Frontscheibe (22) des Kraftfahrzeugs (20) mit Licht einer für den Menschen nicht sichtbaren Wellenlänge;
- einer in der Augmented-Reality-Brille (1) angeordneten optischen Erfassungsvorrichtung (2), die eingerichtet ist, Licht der für den Menschen nicht sichtbaren Wellenlänge zu erfassen (12); und
- einer Posenbestimmungsvorrichtung (5) zum Bestimmen (13) einer Pose der Augmented-Reality-Brille (1) anhand der von der optischen Erfassungsvorrichtung (2) erfassten Informationen;
**dadurch gekennzeichnet, dass** der Bereich der Frontscheibe (22) durch das von der Frontscheibe (22) reflektierte Licht für das Bestimmen (13) der Pose der Augmented-Reality-Brille (1) maskiert wird, indem das von der Lichtquelle (21) erzeugte Licht nahezu ausschließlich auf die Frontscheibe (22) trifft und diese dabei möglichst vollständig ausleuchtet, wobei das von der Lichtquelle (21) ausgesandte, von der Frontscheibe (22) reflektierte und auf die optische Erfassungsvorrichtung (2) auftreffende Licht jenes Licht überstrahlt, welches von außen durch die Frontscheibe (22) auf die optische Erfassungsvorrichtung (2) trifft, so dass sich die Kontur der Frontscheibe in der optischen Erfassungsvorrichtung abbildet.

2. System zum Einmessen einer Augmented-Reality-Brille (1) in einem Kraftfahrzeug (20), mit:
- zumindest einer im Kraftfahrzeug (20) angeordneten Lichtquelle (21) zum Beleuchten (11) zumindest einer Frontscheibe (22) des Kraftfahrzeugs (20) mit Licht einer für den Menschen nicht sichtbaren Wellenlänge; und
- einer in der Augmented-Reality-Brille (1) angeordneten optischen Erfassungsvorrichtung (2), die eingerichtet ist, Licht der für den Menschen nicht sichtbaren Wellenlänge zu erfassen (12);
**gekennzeichnet durch**:
- eine Einmessvorrichtung (6) zum Ermitteln (14) einer Transformationsvorschrift für die Augmented-Reality-Brille (1) durch einen Abgleich von Kanten der Frontscheibe (22), die auf Grundlage des von der Frontscheibe (22) reflektierten Lichts detektiert wurden, mit einer bekannten Geometrie der Frontscheibe (22), wobei das von der Lichtquelle (21) erzeugte Licht nahezu ausschließlich auf die Frontscheibe (22) trifft und diese dabei möglichst vollständig ausleuchtet, wobei das von der Lichtquelle (21) ausgesandte, von der Frontscheibe (22) reflektierte und auf die optische Erfassungsvorrichtung (2) auftreffende Licht jenes Licht überstrahlt, welches von außen durch die Frontscheibe (22) auf die optische Erfassungsvorrichtung (2) trifft, so dass sich die Kontur der Frontscheibe in der optischen Erfassungsvorrichtung abbildet.

3. System gemäß Anspruch 1 oder 2, wobei weitere Scheiben des Kraftfahrzeugs (20) oder Objekte im Innenraum des Kraftfahrzeugs (20) von der zumindest einen Lichtquelle (21) oder von weiteren Lichtquellen mit Licht der für den Menschen nicht sichtbaren Wellenlänge beleuchtet werden.

4. System gemäß einem der vorherigen Ansprüche, wobei die Frontscheibe (22), die weiteren Scheiben oder die Objekte im Innenraum des Kraftfahrzeugs (20) eine reflektierende Schicht (23) aufweisen, die Licht der für den Menschen nicht sichtbaren Wellenlänge in Richtung der optischen Erfassungsvorrichtung (2) reflektiert.

5. System gemäß Anspruch 4, wobei die reflektierende Schicht (23) eine Prismenstruktur oder holographisch-optische Elemente aufweist.

6. System gemäß einem der vorherigen Ansprüche, wobei die optische Erfassungsvorrichtung (2) eine Kamera (3) aufweist.

7. System gemäß einem der vorherigen Ansprüche, wobei die Posenbestimmungsvorrichtung (5) oder die Einmessvorrichtung (6) in der Augmented-Reality-Brille (1) oder im Kraftfahrzeug (20) angeordnet sind.

8. Verfahren zum Bestimmen einer Pose einer Augmented-Reality-Brille (1) in einem Kraftfahrzeug (20) unter Verwendung einer Vorrichtung gemäß Anspruch 1, mit den Schritten:
- Beleuchten (11) zumindest einer Frontscheibe (22) des Kraftfahrzeugs (20) mit Licht einer für den Menschen nicht sichtbaren Wellenlänge;
- Erfassen (12) des von der Frontscheibe (22) des Kraftfahrzeugs (20) reflektierten Lichts der für den Menschen nicht sichtbaren Wellenlänge durch eine in der Augmented-Reality-Brille (1) angeordnete optische Erfassungsvorrichtung (2); und
- Bestimmen (13) einer Pose der Augmented-Reality-Brille (1) anhand der von der optischen Erfassungsvorrichtung (2) erfassten Informationen;
**dadurch gekennzeichnet, dass** der Bereich der Frontscheibe (22) durch das von der Frontscheibe (22) reflektierte Licht für das Bestimmen (13) der Pose der Augmented-Reality-Brille (1) maskiert wird, indem das von der Lichtquelle (21) erzeugte Licht nahezu ausschließlich auf die Frontscheibe (22) trifft und diese dabei möglichst vollständig ausleuchtet, wobei das von der Lichtquelle (21) ausgesandte, von der Frontscheibe (22) reflektierte und auf die optische Erfassungsvorrichtung (2) auftreffende Licht jenes Licht überstrahlt, welches von außen durch die Frontscheibe (22) auf die optische Erfassungsvorrichtung (2) trifft, so dass sich die Kontur der Frontscheibe in der optischen Erfassungsvorrichtung abbildet.

9. Verfahren zum Einmessen einer Augmented-Reality-Brille (1) in einem Kraftfahrzeug (20) unter Verwendung einer Vorrichtung gemäß Anspruch 2, mit den Schritten:
- Beleuchten (11) zumindest einer Frontscheibe (22) des Kraftfahrzeugs (20) mit Licht einer für den Menschen nicht sichtbaren Wellenlänge; und
- Erfassen (12) des von der Frontscheibe (22) des Kraftfahrzeugs (20) reflektierten Lichts der für den Menschen nicht sichtbaren Wellenlänge durch eine in der Augmented-Reality-Brille (1) angeordnete optische Erfassungsvorrichtung (2);
**gekennzeichnet durch**:
- Detektieren von Kanten der Frontscheibe (22) auf Grundlage des von der Frontscheibe (22) reflektierten Lichts; und
- Ermitteln (14) einer Transformationsvorschrift für die Augmented-Reality-Brille (1) durch einen Abgleich der Kanten der Frontscheibe (22) mit einer bekannten Geometrie der Frontscheibe (22), wobei das auf die Frontscheibe (22) treffende, von der Frontscheibe (22) reflektierte und auf die optische Erfassungsvorrichtung (2) auftreffende Licht jenes Licht überstrahlt, welches von außen durch die Frontscheibe (22) auf die optische Erfassungsvorrichtung (2) trifft, so dass sich die Kontur der Frontscheibe in der optischen Erfassungsvorrichtung abbildet.

10. Verfahren gemäß Anspruch 8 oder 9, wobei die optische Erfassungsvorrichtung (2) eine Kamera (3) aufweist.

11. Verfahren zum Unterstützen einer Posenbestimmung einer Augmented-Reality-Brille (1) in einem Kraftfahrzeug (20) unter Verwendung einer Vorrichtung gemäß Anspruch 12, mit den Schritten:
- Erzeugen (10) von Licht einer für den Menschen nicht sichtbaren Wellenlänge; und
- Beleuchten (11) zumindest einer Frontscheibe (22) des Kraftfahrzeugs (20) mit dem Licht der für den Menschen nicht sichtbaren Wellenlänge; **dadurch gekennzeichnet, dass** das erzeugte Licht nahezu ausschließlich auf die Frontscheibe (22) trifft und diese dabei möglichst vollständig ausleuchtet, wobei das auf die Frontscheibe (22) treffende, von der Frontscheibe (22) reflektierte und auf eine in der Augmented-Reality-Brille (1) angeordnete optische Erfassungsvorrichtung (2) auftreffende Licht jenes Licht überstrahlt, welches von außen durch die Frontscheibe (22) auf die optische Erfassungsvorrichtung (2) trifft, so dass sich die Kontur der Frontscheibe in der optischen Erfassungsvorrichtung abbildet.

12. Kraftfahrzeug (20) mit einer Frontscheibe (22) und zumindest einer in einem Innenraum angeordneten Lichtquelle (21) zum Generieren von Licht einer für den Menschen nicht sichtbaren Wellenlänge, **dadurch gekennzeichnet, dass** die zumindest eine Lichtquelle (21) derart ausgebildet ist, dass das von ihr generierte Licht nahezu ausschließlich auf die Frontscheibe (22) trifft und diese dabei möglichst vollständig ausleuchtet, wobei das auf die Frontscheibe (22) treffende, von der Frontscheibe (22) reflektierte und auf eine in einer Augmented-Reality-Brille (1) angeordnete optische Erfassungsvorrichtung (2) auftreffende Licht jenes Licht überstrahlt, welches von außen durch die Frontscheibe (22) auf die optische Erfassungsvorrichtung (2) trifft, so dass sich die Kontur der Frontscheibe in der optischen Erfassungsvorrichtung abbildet, wobei die Frontscheibe (22) eine reflektierende Schicht (23) aufweist, die eingerichtet ist, das Licht der für den Menschen nicht sichtbaren Wellenlänge in Richtung einer optischen Erfassungsvorrichtung (2) zu reflektieren.

13. Kraftfahrzeug (20) gemäß Anspruch 12, wobei die reflektierende Schicht (23) eine Prismenstruktur oder holographisch-optische Elemente aufweist.

## Claims

1. System for determining a pose of augmented reality glasses (1) in a motor vehicle (20), comprising:
- at least one light source (21) arranged in the motor vehicle (20) for illuminating (11) at least a windshield (22) of the motor vehicle (20) using light at a wavelength which is not visible to humans;
- an optical detection device (2) arranged in the augmented reality glasses (1), which is designed to detect (12) light at the wavelength which is not visible to humans; and
- a pose determination device (5) for determining (13) a pose of the augmented reality glasses (1) on the basis of information detected by the optical detection device (2);
**characterized in that** the region of the windshield (22) is masked by the light reflected by the windshield (22) for determining (13) the pose of the augmented reality glasses (1), by the light generated by the light source (21) striking the windshield (22) almost exclusively and illuminating it as completely as possible, the light emitted by the light source (21), reflected by the windshield (22) and striking the optical detection device (2) outshining the light which strikes the optical detection device (2) from the outside through the windshield (22), so that the contour of the windshield is imaged in the optical detection device.

2. System for calibrating augmented reality glasses (1) in a motor vehicle (20), comprising:
- at least one light source (21) arranged in the motor vehicle (20) for illuminating (11) at least a windshield (22) of the motor vehicle (20) using light at a wavelength which is not visible to humans; and
- an optical detection device (2) arranged in the augmented reality glasses (1), which is designed to detect (12) light at the wavelength which is not visible to humans; **characterized by**:
- a calibration device (6) for ascertaining (14) a transformation rule for the augmented reality glasses (1) by comparing edges of the windshield (22) detected on the basis of the light reflected by the windshield (22) with
a known geometry of the windshield (22), the light generated by the light source (21) striking the windshield (22) almost exclusively and illuminating it as completely as possible, the light emitted by the light source (21), reflected by the windshield (22) and striking the optical detection device (2) outshining the light which strikes the optical detection device (2) from the outside through the windshield (22), so that the contour of the windshield is imaged in the optical detection device.

3. System according to either claim 1 or claim 2, wherein further windows of the motor vehicle (20) or objects in the interior of the motor vehicle (20) are illuminated by the at least one light source (21) or by further light sources using light at the wavelength which is not visible to humans.

4. System according to any of the preceding claims, wherein the windshield (22), the further windows or the objects in the interior of the motor vehicle (20) have a reflective layer (23) which reflects light at the wavelength which is not visible to humans in the direction of the optical detection device (2).

5. System according to claim 4, wherein the reflective layer (23) comprises a prism structure or holographic optical elements.

6. System according to any of the preceding claims, wherein the optical detection device (2) comprises a camera (3).

7. System according to any of the preceding claims, wherein the pose determination device (5) or the calibration device (6) are arranged in the augmented reality glasses (1) or in the motor vehicle (20).

8. Method for determining a pose of augmented reality glasses (1) in a motor vehicle (20) using a device according to claim 1, comprising the steps of:
- illuminating (11) at least a windshield (22) of the motor vehicle (20) using light at a wavelength which is not visible to humans;
- detecting (12) the light at the wavelength which is not visible to humans reflected by the windshield (22) of the motor vehicle (20) by means of an optical detection device (2) arranged in the augmented reality glasses (1); and
- determining (13) a pose of the augmented reality glasses (1) on the basis of the information detected by the optical detection device (2);
**characterized in that** the region of the windshield (22) is masked by the light reflected by the windshield (22) for determining (13) the pose of the augmented reality glasses (1), by the light generated by the light source (21) striking the windshield (22) almost exclusively and illuminating it as completely as possible, the light emitted by the light source (21), reflected by the windshield (22) and striking the optical detection device (2) outshining the light which strikes the optical detection device (2) from the outside through the windshield (22), so that the contour of the windshield is imaged in the optical detection device.

9. Method for calibrating augmented reality glasses (1) in a motor vehicle (20) using a device according to claim 2, comprising the steps of:
- illuminating (11) at least a windshield (22) of the motor vehicle (20) using light at a wavelength which is not visible to humans; and
- detecting (12) the light at the wavelength which is not visible to humans reflected by the windshield (22) of the motor vehicle (20) by means of an optical detection device (2) arranged in the augmented reality glasses (1);
**characterized by**:
- detecting edges of the windshield (22) on the basis of the light reflected by the windshield (22); and
- ascertaining (14) a transformation rule for the augmented reality glasses (1) by comparing the edges of the windshield (22) with a known geometry of the windshield (22), the light striking the windshield (22), reflected by the windshield (22) and striking the optical detection device (2) outshining the light which strikes the optical detection device (2) from the outside through the windshield (22), so that the contour of the windshield is imaged in the optical detection device.

10. Method according to either claim 8 or claim 9, wherein the optical detection device (2) comprises a camera (3).

11. Method for supporting a pose determination of augmented reality glasses (1) in a motor vehicle (20) using a device according to claim 12, comprising the steps of:
- generating (10) light at a wavelength which is not visible to humans; and
- illuminating (11) at least a windshield (22) of the motor vehicle (20) using light at the wavelength which is not visible to humans; **characterized in that** the light generated strikes the windshield (22) almost exclusively and illuminates it as completely as possible, the light striking the windshield (22), reflected by the windshield (22) and striking an optical detection device (2) arranged in the augmented reality glasses (1) outshining the light which strikes the optical detection device (2) from the outside through the windshield (22), so that the contour of the windshield is imaged in the optical detection device.

12. Motor vehicle (20) having a windshield (22) and at least one light source (21) arranged in an interior for generating light at a wavelength which is not visible to humans, **characterized in that** the at least one light source (21) is designed such that the light generated thereby strikes the windshield (22) almost exclusively and illuminates it as completely as possible, the light striking the windshield (22), reflected by the windshield (22) and striking an optical detection device (2) arranged in the augmented reality glasses (1) outshining the light which strikes the optical detection device (2) from the outside through the windshield (22), so that the contour of the windshield is imaged in the optical detection device, the windshield (22) having a reflective layer (23) which is designed to reflect the light at the wavelength which is not visible to humans in the direction of an optical detection device (2).

13. Motor vehicle (20) according to claim 12, wherein the reflective layer (23) comprises a prism structure or holographic optical elements.

## Revendications

1. Système pour la détermination d'une pose de lunettes à réalité augmentée (1) dans un véhicule automobile (20), comportant :
- au moins une source lumineuse (21) disposée dans le véhicule automobile (20) pour l'éclairage (11) d'au moins un pare-brise (22) du véhicule automobile (20) avec une lumière d'une longueur d'onde non visible pour l'homme ;
- un dispositif de détection optique (2) disposé dans les lunettes à réalité augmentée (1), qui est conçu pour détecter (12) la lumière de la longueur d'onde non visible pour l'homme ; et
- un dispositif de détermination de pose (5) pour la détermination (13) d'une pose des lunettes à réalité augmentée (1) sur la base des informations détectées par le dispositif de détection optique (2) ;
**caractérisé en ce que** la zone du pare-brise (22) est masquée par la lumière réfléchie par le pare-brise (22) pour la détermination (13) de la pose des lunettes à réalité augmentée (1), **en ce que** la lumière générée par la source de lumière (21) arrive presque exclusivement sur le pare-brise (22) et l'éclaire aussi complètement que possible, dans lequel la lumière émise par la source de lumière (21), réfléchie par le pare-brise (22) et arrivant sur le dispositif de détection optique (2), éclipse la lumière qui arrive sur le dispositif de détection optique (2) de l'extérieur à travers le pare-brise (22), en sorte que le contour du pare-brise se reproduit dans le dispositif de détection optique.

2. Système pour l'étalonnage de lunettes à réalité augmentée (1) dans un véhicule automobile (20), comportant :
- au moins une source lumineuse (21) disposée dans le véhicule automobile (20) pour l'éclairage (11) d'au moins un pare-brise (22) du véhicule automobile (20) avec une lumière d'une longueur d'onde non visible pour l'homme ; et
- un dispositif de détection optique (2) disposé dans les lunettes à réalité augmentée (1), qui est conçu pour détecter (12) la lumière de la longueur d'onde non visible pour l'homme ;
**caractérisé par** :
- un dispositif d'étalonnage (6) pour l'établissement (14) d'une règle de transformation pour les lunettes à réalité augmentée (1) en comparant les bords du pare-brise (22) détectés sur la base de la lumière réfléchie par le pare-brise (22) avec
une géométrie connue du pare-brise (22), dans lequel la lumière produite par la source de lumière (21) arrive presque exclusivement sur le pare-brise (22) et l'éclaire aussi complètement que possible, dans lequel la lumière émise par la source de lumière (21), réfléchie par le pare-brise (22) et arrivant sur le dispositif de détection optique (2) éclipse la lumière qui arrive sur le dispositif de détection optique (2) de l'extérieur à travers le pare-brise (22), en sorte que le contour du pare-brise se reproduit dans le dispositif de détection optique.

3. Système selon la revendication 1 ou 2, dans lequel d'autres vitres du véhicule automobile (20) ou des objets dans l'habitacle du véhicule automobile (20) sont éclairés par l'au moins une source de lumière (21) ou par d'autres sources de lumière avec une lumière de longueur d'onde non visible pour l'homme.

4. Système selon l'une des revendications précédentes, dans lequel le pare-brise (22), les autres vitres ou les objets dans l'habitacle du véhicule automobile (20) présentent une couche réfléchissante (23) qui réfléchit la lumière de longueur d'onde non visible pour l'homme en direction du dispositif de détection optique (2).

5. Système selon la revendication 4, dans lequel la couche réfléchissante (23) présente une structure prismatique ou des éléments optiques holographiques.

6. Système selon l'une des revendications précédentes, dans lequel le dispositif de détection optique (2) présente une caméra (3).

7. Système selon l'une des revendications précédentes, dans lequel le dispositif de détermination de pose (5) ou le dispositif d'étalonnage (6) sont disposés dans les lunettes à réalité augmentée (1) ou dans le véhicule automobile (20).

8. Procédé pour la détermination d'une pose de lunettes à réalité augmentée (1) dans un véhicule automobile (20) au moyen d'un dispositif selon la revendication 1, comportant les étapes consistant à :
- l'éclairage (11) d'au moins un pare-brise (22) du véhicule automobile (20) avec une lumière d'une longueur d'onde non visible pour l'homme ;
- la détection (12) de la lumière de la longueur d'onde non visible pour l'homme, réfléchie par le pare-brise (22) du véhicule automobile (20), par un dispositif de détection optique (2) disposé dans les lunettes à réalité augmentée (1) ; et
- la détermination (13) d'une pose des lunettes à réalité augmentée (1) au moyen des informations détectées par le dispositif de détection optique (2) ;
**caractérisé en ce que** la zone du pare-brise (22) est masquée par la lumière réfléchie par le pare-brise (22) pour la détermination (13) de la pose des lunettes à réalité augmentée (1), **en ce que** la lumière générée par la source de lumière (21) arrive presque exclusivement sur le pare-brise (22) et l'éclaire aussi complètement que possible, dans lequel la lumière émise par la source de lumière (21), réfléchie par le pare-brise (22) et arrivant sur le dispositif de détection optique (2), éclipse la lumière qui arrive sur le dispositif de détection optique (2) de l'extérieur à travers le pare-brise (22), en sorte que le contour du pare-brise se reproduit dans le dispositif de détection optique.

9. Procédé pour l'étalonnage de lunettes à réalité augmentée (1) dans un véhicule automobile (20) au moyen d'un dispositif selon la revendication 2, comportant les étapes consistant à :
- l'éclairage (11) d'au moins un pare-brise (22) du véhicule automobile (20) avec une lumière d'une longueur d'onde non visible pour l'homme ; et
- la détection (12) de la lumière de la longueur d'onde non visible pour l'homme, réfléchie par le pare-brise (22) du véhicule automobile (20), par un dispositif de détection optique (2) disposé dans les lunettes à réalité augmentée (1) ;
**caractérisé par** :
- la détection des bords du pare-brise (22) sur la base de la lumière réfléchie par le pare-brise (22) ; et
- la détermination (14) d'une règle de transformation pour les lunettes à réalité augmentée (1) par une comparaison des bords du pare-brise (22) avec une géométrie connue du pare-brise (22), dans lequel la lumière arrivant sur le pare-brise (22), réfléchie par le pare-brise (22) et arrivant sur le dispositif de détection optique (2), éclipse la lumière qui arrive sur le dispositif de détection optique (2) de l'extérieur à travers le pare-brise (22), en sorte que le contour du pare-brise se reproduit dans le dispositif de détection optique.

10. Procédé selon la revendication 8 ou 9, dans lequel le dispositif de détection optique (2) présente une caméra (3).

11. Procédé pour l'assistance à une détermination de pose de lunettes à réalité augmentée (1) dans un véhicule automobile (20) au moyen d'un dispositif selon la revendication 12, comportant les étapes consistant à :
- de production (10) de lumière d'une longueur d'onde non visible pour l'homme ; et
- l'éclairage (11) d'au moins un pare-brise (22) du véhicule automobile (20) avec la lumière de la longueur d'onde non visible pour l'homme ;
**caractérisé en ce que** la lumière produite arrive presque exclusivement sur le pare-brise (22) et l'éclaire ainsi aussi complètement que possible, dans lequel la lumière arrivant sur le pare-brise (22), réfléchie par le pare-brise (22) et arrivant sur un dispositif de détection optique (2) disposé dans les lunettes à réalité augmentée (1), éclipse la lumière qui arrive sur le dispositif de détection optique (2) de l'extérieur à travers le pare-brise (22), en sorte que le contour du pare-brise se reproduit dans le dispositif de détection optique.

12. Véhicule automobile (20) comportant un pare-brise (22) et au moins une source de lumière (21) disposée dans un habitacle pour la génération de la lumière d'une longueur d'onde non visible pour l'homme, **caractérisé en ce que** l'au moins une source de lumière (21) est conçue de telle sorte que la lumière qu'elle génère arrive presque exclusivement sur le pare-brise (22) et l'éclaire aussi complètement que possible, dans lequel la lumière arrivant sur le pare-brise (22), réfléchie par le pare-brise (22) et arrivant sur un dispositif de détection optique (2) disposé dans des lunettes à réalité augmentée (1) éclipse la lumière qui arrive sur le dispositif de détection optique (2) de l'extérieur à travers le pare-brise (22), en sorte que le contour du pare-brise se reproduit dans le dispositif de détection optique, dans lequel le pare-brise (22) présente une couche réfléchissante (23) qui est conçue pour réfléchir la lumière de la longueur d'onde non visible pour l'homme en direction d'un dispositif de détection optique (2).

13. Véhicule automobile (20) selon la revendication 12, dans lequel la couche réfléchissante (23) présente une structure prismatique ou des éléments optiques holographiques.
